# FASCICULE DE BREVET EUROPEEN

(11) **EP 3 237 242 B1**
(45) Date de publication et mention de la délivrance du brevet: **05.02.2020**
(21) Numéro de dépôt: 15830801.5
(22) Date de dépôt: 17.12.2015
(51) Int. Cl.: B60H 1/00, B60K 37/06, G05G 1/10

(54) **DISPOSITIF DE RECEPTION D'UN TABLEAU DE COMMANDE D'UN VEHICULE AUTOMOBILE**
VORRICHTUNG ZUR AUFNAHME EINES KRAFTFAHRZEUGBEDIENFELDS
DEVICE FOR RECEIVING A MOTOR VEHICLE CONTROL PANEL

(30) Priorité: 22.12.2014 FR 1463098
(43) Date de publication de la demande: 01.11.2017
(73) Titulaire: Renault S.A.S., 92100 Boulogne-Billancourt (FR)
(72) Inventeur: LOISON, Patrick, 92500 Rueil Malmaison (FR); VENOT, Nathalie, 78940 La Queue Les Yvelines (FR)
(86) Numéro de dépôt international: PCT/FR2015/053577
(87) Numéro de publication internationale: WO 2016/102828

(56) Documents cités:
- EP-A1- 0 669 217
- FR-A3- 2 668 427

## Description

### Domaine technique de l'invention

L'invention concerne le domaine de l'automobile.

L'invention a pour objet plus particulièrement un dispositif pour réception d'un tableau de commande d'un système d'un véhicule automobile, notamment une climatisation, ledit tableau de commande étant muni d'éléments d'actionnement, notamment de boutons, présentant chacun une partie formant une interface homme machine.

### État de la technique

Le climatiseur d'un véhicule automobile est associé à un tableau de commande muni d'une interface homme machine disposée dans l'habitacle du véhicule de sorte à permettre à un utilisateur de régler le fonctionnement dudit climatiseur.

Il existe deux types de technologies dans le domaine de la climatisation automobile :
- une première technologie intègre des commandes à câbles du climatiseur,
- une deuxième technologie intègre des liens avec le reste du véhicule uniquement de nature électrique / électronique et dans ce cas, le tableau de commande pilote des micromoteurs dans le climatiseur, ce qui supprime les câbles mécaniques entre le tableau de commande et le climatiseur, tel que divulgué dans le document FR2668427A3.

Dans le cadre de la présente invention, on s'intéresse tout particulièrement à améliorer la première technologie.

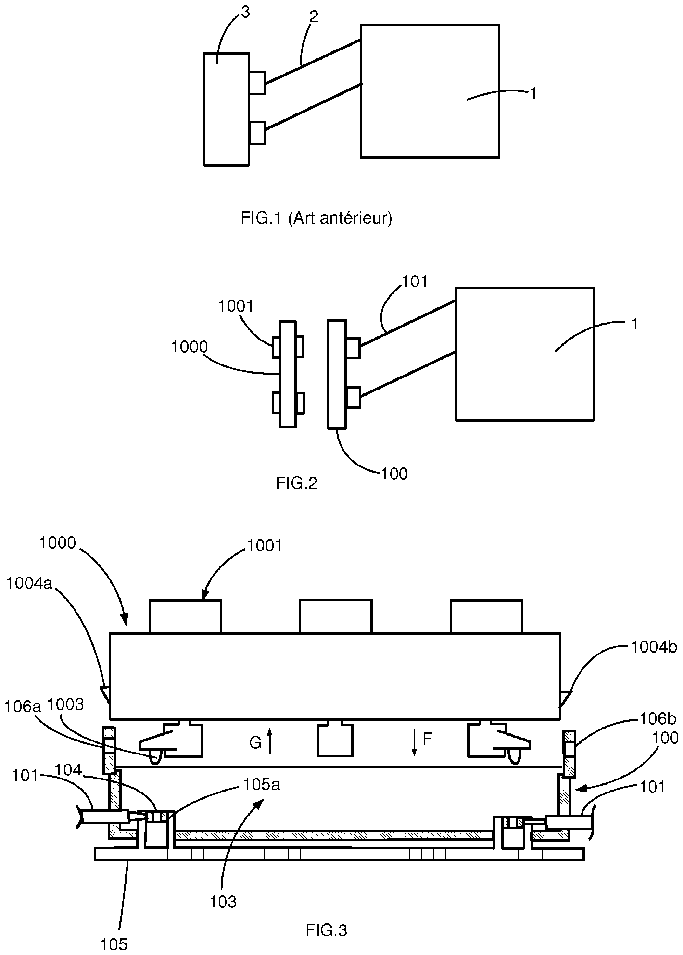

Dans l'état actuel de l'état de la technique, les fournisseurs de la première technologie développent et intègrent leurs propres tableaux de commande. Ainsi, lorsqu'un constructeur automobile reçoit un climatiseur 1, ce dernier est, comme l'illustre la figure 1, équipé de câbles d'actionnement 2 reliés directement à un tableau de commande 3 correspondant. Le cœur de métier des fournisseurs de climatiseurs étant le fonctionnement mécanique du climatiseur, cela restreint le niveau d'expertises et d'innovations au niveau du tableau de commande. De plus, les fournisseurs de climatiseurs ne développant que des tableaux de commande de climatisation, cela rend plus difficile l'homogénéisation du tableau de bord du véhicule automobile.

### Objet de l'invention

Le but de la présente invention est de proposer une solution qui remédie aux inconvénients listés ci-dessus.

On tend vers ce but grâce à un dispositif pour réception d'un tableau de commande d'un système d'un véhicule automobile, notamment une climatisation, ledit tableau de commande étant muni d'éléments d'actionnement, notamment de boutons, présentant chacun une partie formant une interface homme machine, ledit dispositif de réception étant caractérisé en ce qu'il comprend :
- des câbles d'actionnement reliés d'une part audit système et d'autre part destinés à coopérer avec les éléments d'actionnement, et
- un logement de réception du tableau de commande,
ledit logement de réception du tableau de commande et lesdits câbles d'actionnement étant agencés de telle sorte que lorsque le tableau de commande est assemblé au logement de réception, un lien mécanique est réalisé entre chaque élément d'actionnement et un des câbles d'actionnement correspondant par interaction d'un câble d'actionnement avec une partie correspondante de l'élément d'actionnement.

Notamment, chaque câble d'actionnement comporte une extrémité d'accouplement configurée de sorte à s'accoupler avec un élément d'actionnement correspondant.

En particulier, le dispositif comporte un organe de maintien inhibant les mouvements d'au moins une des extrémités d'accouplement, notamment chaque extrémité d'accouplement est maintenue par l'organe de maintien, ledit organe de maintien étant monté au logement de manière amovible de telle sorte que son retrait libère ladite au moins une des extrémités d'accouplement.

Avantageusement, le dispositif comporte un détrompeur agencé de telle manière que le tableau de commande puisse s'insérer dans le logement uniquement selon une position prédéterminée.

Par exemple, le dispositif comporte un système de verrouillage du tableau de commande lorsque ce dernier est inséré dans le logement.

L'invention est aussi relative à un agencement pour véhicule automobile comportant un dispositif pour réception d'un tableau de commande tel que décrit, et un tableau de commande muni d'éléments d'actionnement, notamment de boutons, présentant chacun une partie formant une interface homme machine, ledit tableau de commande étant assemblé au logement de telle sorte que chaque élément d'actionnement est relié mécaniquement à un des câbles d'actionnement correspondant.

L'agencement peut comporter au moins un détrompeur assurant un positionnement adapté du tableau de commande dans le logement.

En particulier, l'agencement comporte un système de verrouillage, notamment réversible, de l'assemblage du tableau de commande dans le logement dudit dispositif.

L'invention est aussi relative à un tableau de commande muni d'éléments d'actionnement, notamment de boutons, présentant chacun une partie formant une interface homme machine, ledit tableau de commande étant configuré de sorte à s'insérer dans un logement d'un dispositif tel que décrit, ledit tableau de commande comportant un système amovible de maintien de chacun des éléments d'actionnement dans une position initiale permettant un accouplement direct desdits éléments d'actionnement avec les câbles d'actionnement du dispositif lors de l'insertion du tableau de commande dans le logement.

L'invention est aussi relative à un procédé d'assemblage d'une partie d'un véhicule automobile, ledit procédé comportant:
- une étape de fourniture d'un dispositif tel que décrit,
- une étape de fourniture d'un tableau de commande muni d'éléments d'actionnement, notamment de boutons, présentant chacun une partie formant une interface homme machine,
- une étape d'insertion du tableau de commande dans le logement du dispositif d'où il résulte un accouplement entre chaque élément d'actionnement et un des câbles d'actionnement correspondant par interaction d'un câble d'actionnement avec une partie correspondante de l'élément d'actionnement.

Selon une réalisation, le procédé comporte au préalable et au cours de l'étape d'insertion :
- une étape de maintien en position d'extrémités d'accouplement desdits câbles d'actionnement,
- une étape de maintien en position des éléments d'actionnement, lesdites positions étant choisis de telle sorte que l"étape d'insertion participe à former le lien mécanique entre chaque élément d'actionnement et une extrémité d'accouplement correspondante d'un des câbles d'actionnement.

### Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :
- la figure 1 illustre un système selon l'art antérieur intégrant une climatisation reliée par des câbles à un tableau de commande,
- la figure 2 illustre un système en deux parties selon un mode d'exécution de l'invention,
- la figure 3 illustre plus en détails un tableau de commande avant son insertion dans un dispositif de réception selon un mode d'exécution de l'invention,
- la figure 4 représente la figure 3 vue selon la vue G,
- la figure 5 représente la figure 3 vue selon la vue F,
- la figure 6 illustre plus en détails un tableau de commande après son insertion dans un dispositif de réception selon un mode d'exécution de l'invention.

### Description de modes préférentiels de l'invention

La présente invention diffère de l'art antérieur en ce qu'elle propose de fournir une interface mécanique destinée à la réception d'un tableau de commande dissociable du système qu'il doit commander.

Dans la présente description, un « actionneur » aussi appelé « élément d'actionnement » est un organe qui transforme une énergie qui lui est fournie en un phénomène physique utilisable. Par exemple, un actionneur peut être un bouton poussoir et dans ce cas le déplacement du bouton poussoir peut être utilisé pour transmettre un effort en vue d'effectuer une action. Selon un autre exemple, un actionneur peut être un bouton rotatif, dans ce cas c'est le phénomène de rotation qui peut être utilisé en vue d'effectuer une action.

Les figures 2, 3 et 5 et 6 illustrent un dispositif pour réception 100 d'un tableau de commande 1000 d'un système d'un véhicule automobile, notamment une climatisation. Ledit tableau de commande 1000 est muni d'éléments d'actionnement 1001, notamment de boutons, présentant chacun une partie formant une interface homme machine. Les parties des éléments d'actionnement 1001 formant l'interface homme machine sont des parties préhensibles par un utilisateur.

Bien que le dispositif pour réception 100 soit tout particulièrement destiné à coopérer avec un tableau de commande 1000 d'une climatisation, le concept peut être élargi à tout tableau de commande 1000 destiné à coopérer avec un système commandé par câbles d'actionnement.

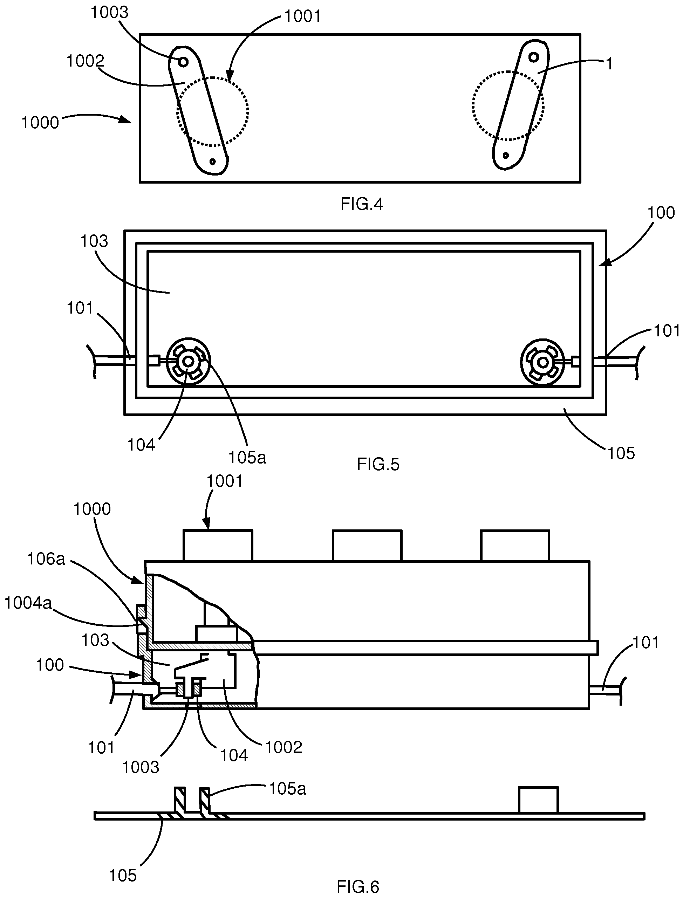

Le dispositif de réception 100 comprend des câbles d'actionnement 101 reliés d'une part audit système 1 (figure 2) et d'autre part destinés à coopérer avec les éléments d'actionnement 1001 (voir en ce sens la figure 6 qui montre l'interaction d'un câble d'actionnement 101 avec une partie correspondante 1002 d'un élément d'actionnement 1001). Le dispositif de réception 100 comporte en outre un logement de réception 103 (figures 3, 5 et 6) du tableau de commande 1000. Ce logement de réception 103 du tableau de commande et lesdits câbles d'actionnement 101 étant agencés de telle sorte que lorsque le tableau de commande 1000 est assemblé au logement de réception 103 (figure 6), un lien mécanique est réalisé entre chaque élément d'actionnement 1001 et un des câbles d'actionnement 101 correspondant.

On comprend de ce qui a été dit ci-dessus que chaque élément d'actionnement 1001 peut comporter d'une part une partie préhensible par un utilisateur, et d'autre part une partie 1002 configurée de sorte à transférer un effort d'un utilisateur appliqué à la partie préhensible. En particulier, la partie 1002 peut comporter, comme illustré à la figure 4, un bras entraîné par la rotation de la partie préhensible mise en œuvre par l'utilisateur, ledit bras étant muni d'un élément en saillie ou ergot agencé de sorte à coopérer avec une extrémité d'un câble d'actionnement correspondant.

En particulier, chaque câble d'actionnement 101 comporte une extrémité d'accouplement 104 (figures 3, 5 et 6) configurée de sorte à s'accoupler avec un élément d'actionnement 1001 correspondant. Par exemple, une extrémité d'accouplement 104 peut adopter la forme d'une douille creuse en son centre qui sera pénétrée par un élément en saillie ou ergot 1003 appartenant notamment à l'élément référencé 1002 de l'élément d'actionnement 1001 décrit ci-dessus et comme illustré aux figures 3, 4 et 6). Bien entendu, d'autres exemples sont à la portée de l'homme du métier du moment que l'accouplement est rendu possible.

Plus particulièrement, le logement 103 adopte la forme d'une empreinte négative d'une face du tableau de commande 1000, notamment de la face du tableau de commande 1000 opposée à une face comportant les parties d'interaction homme machine accessibles à l'utilisateur. Ainsi, le tableau de commande 100 peut venir s'emboîter dans le logement 103.

On comprend de ce qui a été dit ci-dessus que le lien mécanique entre chaque élément d'actionnement 1001 et le câble d'actionnement 101 correspondant est notamment réalisé lors de l'assemblage et donc en particulier automatiquement lors de l'insertion du tableau de commande 1000 dans le logement 103. Il en résulte que les câbles d'actionnement 101 doivent préférentiellement adopter une position particulière au cours de l'assemblage du tableau de commande 1000 avec ledit logement 103 de sorte à faciliter la mise en place de ce lien mécanique. En particulier, ce besoin peut être satisfait par le fait que le dispositif de réception 100 comporte un organe de maintien 105 (figures 3, 5 et 6) inhibant les mouvements d'au moins une des extrémités d'accouplement 104, notamment chaque extrémité d'accouplement 104 desdits câbles d'actionnement 101 est maintenue par l'organe de maintien 105, ledit organe de maintien 105 étant monté au logement 103 de manière amovible de telle sorte que son retrait libère ladite au moins une des extrémités d'accouplement 104, notamment chacune des extrémités d'accouplement 104 (figure 6). En particulier, comme illustré aux figures 3, 5 et 6, l'organe de maintien 105 peut comporter une platine à partir de laquelle s'étendent des pinces 105a configurées de sorte à venir enserrer les extrémités d'accouplement 104 des câbles d'actionnement 101 dans une configuration de maintien temporaire avant assemblage du tableau de commande 1000 au logement 103.

Selon un perfectionnement, le dispositif de réception 100 comporte un détrompeur agencé de telle manière que le tableau de commande 1000 puisse s'insérer dans le logement 103 uniquement selon une position prédéterminée. Ceci peut notamment être réalisé par une forme particulière de l'empreinte négative du logement 103. Ce perfectionnement permet d'une part de faciliter l'accouplement du tableau de commande 1000 avec le logement 103, et d'autre part de participer, le cas échéant, à la réalisation de chaque lien mécanique au cours de l'insertion du tableau de commande 1000 dans le logement 103 (autrement dit, on assure ici au moins en partie que les extrémités d'accouplement 104 se trouveront sur un chemin souhaité des parties correspondantes 1002 des éléments d'actionnement 1001 pour réaliser un accouplement assurant la formation desdits liens mécaniques).

Selon une réalisation, le dispositif 100 comporte un système de verrouillage du tableau de commande 1000 lorsque ce dernier est inséré dans le logement 103. Par exemple, le système de verrouillage comporte au moins l'un des éléments suivants : une saillie destiné à coopérer avec une ouverture du tableau de commande, une ouverture destinée à coopérer avec une saillie du tableau de bord, un pas de vis ou une vis. Dans l'exemple particulier des figures 3 et 6, le système de verrouillage comporte des ouvertures 106a, 106b destinées à coopérer avec des saillies 1004a, 1004b notamment de sorte à former un assemblage par clip.

L'invention est aussi relative à un agencement pour véhicule automobile comportant un dispositif pour réception 100 d'un tableau de commande 1000 tel que décrit, et un tableau de commande 1000 muni d'éléments d'actionnement 1001, notamment de boutons, présentant chacun une partie formant une interface homme machine, ledit tableau de commande 1000 étant assemblé au logement 103 de telle sorte que chaque élément d'actionnement 1001 est relié mécaniquement à un des câbles d'actionnement 101 correspondant (voir notamment la figure 6).

L'agencement ci-dessus fait référence à un dispositif dont les éléments sont disposés les uns par rapport aux autres de la manière telle que décrite.

Il résulte de ce qui a été dit ci-dessus, que l'agencement peut comporter au moins un détrompeur assurant un positionnement adapté du tableau de commande 1000 dans le logement 103.

Par ailleurs, l'agencement peut comporter un système de verrouillage 106a, 106b, notamment réversible, de l'assemblage du tableau de commande 1000 dans le logement 103 dudit dispositif de réception. La réversibilité de l'assemblage permet une intervention simplifiée en après-vente, par exemple en cas de casse d'une partie de l'interface homme machine, il est aisé de démonter uniquement le tableau de commande 1000 pour le remplacer sans avoir à toucher aux câbles 101 et aux réglages du système 1.

L'invention est aussi relative à un tableau de commande 1000 muni d'éléments d'actionnement 1001, notamment de boutons, présentant chacun une partie formant une interface homme machine, ledit tableau de commande 1000 étant configuré de sorte à s'insérer dans un logement 103 d'un dispositif pour réception 100 tel que décrit. Dans ce cas, le tableau de commande 1000 peut comporter un système amovible (non représenté) de maintien de chacun des éléments d'actionnement 1001 dans une position initiale permettant un accouplement direct desdits éléments d'actionnement avec les câbles d'actionnement 101 du dispositif pour réception lors de l'insertion du tableau de commande 100 dans le logement 103 (lesdits câbles étant alors préférentiellement eux même maintenus par l'organe de maintien 105 dans des positions adaptées à celles des éléments d'actionnement 1001). En fait, le système de maintien amovible permet d'indexer les éléments d'actionnement 1001 dans des positions prédéterminées de telle sorte à permettre la réalisation des liens mécaniques évoqués ci-avant. En particulier, l'organe de maintien et le système de maintien sont configurés de sorte à maintenir respectivement les câbles d'actionnement 101 et les éléments d'actionnement 1001 dans des positions permettant leur accouplement automatique lors de l'insertion du tableau de commande 1000 dans le logement 103. Le système de maintien peut adopter la forme d'un moule épousant les parties préhensibles par un utilisateur des éléments d'actionnement 1001 de telle sorte à éviter tout mouvement desdites parties préhensibles.

En ce sens, l'invention est aussi relative à un procédé d'assemblage d'une partie d'un véhicule automobile. Ce procédé comportant une étape de fourniture d'un dispositif pour réception 100 tel que décrit, une étape de fourniture d'un tableau de commande 1000 muni d'éléments d'actionnement 1001, notamment de boutons, présentant chacun une partie formant une interface homme machine, et une étape d'insertion du tableau de commande 1000 dans le logement 103 du dispositif de réception 100 d'où il résulte un accouplement entre chaque élément d'actionnement 1001 et un des câbles d'actionnement 101 correspondant.

Pour cela, le procédé peut comporter, au préalable et au cours de l'étape d'insertion : une étape de maintien en position d'extrémités d'accouplement 104 desdits câbles d'actionnement 101, une étape de maintien en position des éléments d'actionnement 1001, lesdites positions étant choisies de telle sorte que l'étape d'insertion participe à former le lien mécanique entre chaque élément d'actionnement 1001 et une extrémité d'accouplement 104 correspondante d'un des câbles d'actionnement 101.

En outre, le détrompeur évoqué ci-dessus permet au cours du procédé d'assemblage d'indexer le tableau de commande par rapport au logement afin d'assuré que l'insertion puisse réaliser les différents liens mécaniques évoqués.

En résumé, l'invention permet de dissocier un tableau de commande 1000 assurant les fonctionnalités d'interface homme-machine, d'interface d'assemblage du tableau de commande 1000 dans un logement 103 correspondant et d'interface mécanique entre les éléments d'actionnement 1001 du tableau de commande 1000 et les câbles d'actionnement 101. Le dispositif pour réception 100 permet quant à lui d'assurer les fonctions d'assemblage du tableau de commande 1000 et de lien vers le système via les câbles d'actionnement 101. Par ailleurs, le dispositif pour réception 100 permet de fabriquer une interface standard permettant de réceptionner différents types de tableau de commande 1000 en fonction du type de véhicule automobile ou du type de personnalisation d'un véhicule automobile.

Il a été évoqué précédemment que le système pouvait être une climatisation. En particulier, une installation pour véhicule automobile comporte le dispositif pour réception décrit ci-dessus dont les câbles d'actionnement sont reliés à la climatisation et peuvent être actionnés par l'utilisateur via l'interface homme machine que fourni le tableau de commande dans l'habitable du véhicule automobile. On comprend alors que l'actionnement des câbles d'actionnement permet de piloter la climatisation par exemple pour modifier des consignes de température, de puissance de la ventilation dans l'habitable du véhicule, ou encore de répartition des flux d'air de climatisation.

## Revendications

1. Dispositif pour réception (100) d'un tableau de commande (1000) d'un système (1) d'un véhicule automobile, notamment une climatisation, ledit tableau de commande (1000) étant muni d'éléments d'actionnement (1001), notamment de boutons, présentant chacun une partie formant une interface homme machine, ledit dispositif de réception (100) étant **caractérisé en ce qu'**il comprend :
- des câbles d'actionnement (101) reliés d'une part audit système (1) et d'autre part destinés à coopérer avec les éléments d'actionnement (1001), et
- un logement de réception (103) du tableau de commande (1000),
ledit logement de réception (103) du tableau de commande (1000) et lesdits câbles d'actionnement (1001) étant agencés de telle sorte que lorsque le tableau de commande (1000) est assemblé au logement de réception (103), un lien mécanique est réalisé entre chaque élément d'actionnement (1001) et un des câbles d'actionnement (101) correspondant par interaction d'un câble d'actionnement (101) avec une partie correspondante (1002) de l'élément d'actionnement (1001).

2. Dispositif selon la revendication 1, **caractérisé en ce que** chaque câble d'actionnement (101) comporte une extrémité d'accouplement (104) configurée de sorte à s'accoupler avec un élément d'actionnement (1001) correspondant.

3. Dispositif selon la revendication 2, **caractérisé en ce qu'**il comporte un organe de maintien (105) inhibant les mouvements d'au moins une des extrémités d'accouplement (104), notamment chaque extrémité d'accouplement (104) est maintenue par l'organe de maintien (105), ledit organe de maintien (105) étant monté au logement (103) de manière amovible de telle sorte que son retrait libère ladite au moins une des extrémités d'accouplement (104).

4. Dispositif selon l'une quelconque des revendications 1 à 3, **caractérisé en ce qu'**il comporte un détrompeur agencé de telle manière que le tableau de commande (1000) puisse s'insérer dans le logement (103) uniquement selon une position prédéterminée.

5. Dispositif selon l'une quelconque des revendications 1 à 4, **caractérisé en ce qu'**il comporte un système de verrouillage (106a, 106b) du tableau de commande (1000) lorsque ce dernier est inséré dans le logement (103).

6. Agencement pour véhicule automobile comportant un dispositif pour réception (100) d'un tableau de commande (1000) selon l'une quelconque des revendications précédentes, et un tableau de commande (1000) muni d'éléments d'actionnement (1001), notamment de boutons, présentant chacun une partie formant une interface homme machine, ledit tableau de commande (1000) étant assemblé au logement (103) de telle sorte que chaque élément d'actionnement (1001) est relié mécaniquement à un des câbles d'actionnement (101) correspondant.

7. Agencement selon la revendication 6, **caractérisé en ce qu'**il comporte au moins un détrompeur assurant un positionnement adapté du tableau de commande (1000) dans le logement (103).

8. Agencement selon l'une des revendications 6 ou 7, **caractérisé en ce qu'**il comporte un système de verrouillage (106a, 106b), notamment réversible, de l'assemblage du tableau de commande (1000) dans le logement (103) dudit dispositif.

9. Tableau de commande (1000) muni d'éléments d'actionnement (1001), notamment de boutons, présentant chacun une partie formant une interface homme machine, ledit tableau de commande (1000) étant configuré de sorte à s'insérer dans un logement (103) d'un dispositif selon l'une des revendications 1 à 5, **caractérisé en ce qu'**il comporte un système amovible de maintien de chacun des éléments d'actionnement (1001) dans une position initiale permettant un accouplement direct desdits éléments d'actionnement (1001) avec les câbles d'actionnement du dispositif (100) lors de l'insertion du tableau de commande (100) dans le logement (103).

10. Procédé d'assemblage d'une partie d'un véhicule automobile, **caractérisé en ce qu'**il comporte :
- une étape de fourniture d'un dispositif (100) selon l'une quelconque des revendications 1 à 5,
- une étape de fourniture d'un tableau de commande (100) muni d'éléments d'actionnement (1001), notamment de boutons, présentant chacun une partie formant une interface homme machine,
- une étape d'insertion du tableau de commande (1000) dans le logement (103) du dispositif (100) d'où il résulte un accouplement entre chaque élément d'actionnement (1001) et un des câbles d'actionnement (101) correspondant par interaction d'un câble d'actionnement (101) avec une partie correspondante (1002) de l'élément d'actionnement (1001).

## Patentansprüche

1. Vorrichtung zur Aufnahme (100) einer Bedientafel (1000) eines Systems (1) eines Kraftfahrzeugs, insbesondere einer Klimaanlage, wobei die Bedientafel (1000) mit Bedienelementen (1001), insbesondere Tasten, versehen ist, die jeweils einen Abschnitt aufweisen, der eine Mensch-Maschine-Schnittstelle bildet, wobei die Aufnahmevorrichtung (100) **dadurch gekennzeichnet ist, dass** sie Folgendes umfasst:
- Betätigungszüge (101), die einerseits mit dem System (1) verbunden sind und andererseits dazu bestimmt sind, mit den Betätigungselementen (1001) zusammenzuwirken, und
- einen Aufnahmesitz (103) der Bedientafel (1000), wobei der Aufnahmesitz (103) der Bedientafel (1000) und die Betätigungszüge (1001) so angeordnet sind, dass, wenn die Bedientafel (1000) an dem Aufnahmesitz (103) angebracht ist, eine mechanische Verbindung zwischen jedem Betätigungselement (1001) und einem entsprechenden der Betätigungszüge (101) durch Zusammenwirken eines Betätigungszugs (101) mit einem entsprechenden Abschnitt (1002) des Betätigungselements (1001) hergestellt ist.

2. Die Vorrichtung nach Anspruch 1, **dadurch gekennzeichnet, dass** jeder Betätigungszug (101) ein Kopplungsende (104) aufweist, das dazu ausgebildet ist, mit einem entsprechenden Betätigungselement (1001) gekoppelt zu werden.

3. Vorrichtung nach Anspruch 2, **dadurch gekennzeichnet, dass** sie ein Halteelement (105) umfasst, das die Bewegungen mindestens eines der Kopplungsenden (104) hemmt, insbesondere jedes Kopplungsende (104) von dem Halteelement (105) gehalten wird, wobei das Halteelement (105) lösbar am Sitz (103) derart angebracht ist, dass seine Entnahme das mindestens eine der Kopplungsenden (104) freigibt.

4. Vorrichtung nach einem der Ansprüche 1 bis 3, **dadurch gekennzeichnet, dass** sie eine Unverwechselbarkeitseinrichtung umfasst, die so angeordnet ist, dass die Bedientafel (1000) nur gemäß einer vorbestimmten Position in den Sitz (103) eingefügt werden kann.

5. Vorrichtung nach einem der Ansprüche 1 bis 4, **dadurch gekennzeichnet, dass** sie ein Verriegelungssystem (106a, 106b) für die Bedientafel (1000) umfasst, wenn diese in den Sitz (103) eingefügt ist.

6. Anordnung für ein Kraftfahrzeug aufweisend eine Vorrichtung zur Aufnahme (100) einer Bedientafel (1000) nach einem der vorhergehenden Ansprüche, und eine Bedientafel (1000), die mit Bedienelementen (1001), insbesondere Tasten, versehen ist, die jeweils einen Abschnitt aufweisen, der eine Mensch-Maschine-Schnittstelle bildet, wobei die Bedientafel (1000) so am Sitz (103) angebracht ist, dass jedes Betätigungselement (1001) mechanisch mit einem entsprechenden der Betätigungszüge (101) verbunden ist.

7. Anordnung nach Anspruch 6, **dadurch gekennzeichnet, dass** sie mindestens eine Unverwechselbarkeitseinrichtung aufweist, die eine geeignete Positionierung der Bedientafel (1000) in dem Sitz (103) gewährleistet.

8. Anordnung nach einem der Ansprüche 6 oder 7, **dadurch gekennzeichnet, dass** sie ein Verriegelungssystem (106a, 106b), insbesondere ein umkehrbares, zur Anbringung der Bedientafel (1000) in dem Sitz (103) der Vorrichtung aufweist.

9. Bedientafel (1000), die mit Bedienelementen (1001), insbesondere Tasten, versehen ist, die jeweils einen Abschnitt aufweisen, der eine Mensch-Maschine-Schnittstelle bildet, wobei die Bedientafel (1000) so ausgebildet ist, dass sie sich in einen Sitz (103) einer Vorrichtung nach einem der Ansprüche 1 bis 5 einfügt, **dadurch gekennzeichnet, dass** sie ein lösbares System zum Halten jedes der Betätigungselemente (1001) in einer Anfangsposition, die eine direkte Kopplung der Betätigungselemente (1001) mit den Betätigungszügen der Vorrichtung (100) beim Einfügen der Bedientafel (100) in den Sitz (103) gestattet, aufweist.

10. Verfahren zum Zusammenbau eines Abschnitts eines Kraftfahrzeugs, **dadurch gekennzeichnet, dass** es Folgendes umfasst:
- einen Schritt des Bereitstellens einer Vorrichtung (100) nach einem der Ansprüche 1 bis 5,
- einen Schritt des Bereitstellens einer Bedientafel (100), die mit Bedienelementen (1001), insbesondere Tasten, versehen ist, die jeweils einen Abschnitt aufweisen, der eine Mensch-Maschine-Schnittstelle bildet,
- einen Schritt des Einfügens der Bedientafel (1000) in den Sitz (103) der Vorrichtung (100), woraus eine Kopplung zwischen jedem Betätigungselement (1001) und einem entsprechenden der Betätigungszüge (101) durch Zusammenwirken eines Betätigungszugs (101) mit einem entsprechenden Abschnitt (1002) des Betätigungselements (1001) resultiert.

## Claims

1. Device (100) for receiving a control panel (1000) of a system (1) of a motor vehicle, in particular an air-conditioning system, said control panel (1000) being provided with actuation elements (1001), in particular buttons, each having a part forming a man-machine interface, said receiving device (100) being **characterized in that** it comprises:
- actuation cables (101) connected on one hand to said system (1) and on the other hand intended to cooperate with the actuation elements (1001), and
- a recess (103) for receiving the control panel (1000), said recess (103) for receiving the control panel (1000) and said actuation cables (1001) being arranged such that, when the control panel (1000) is fitted to the receiving recess (103), a mechanical link is established between each actuation element (1001) and a corresponding one of the actuation cables (101), by interaction of an actuation cable (101) with a corresponding part (1002) of the actuation element (1001).

2. Device according to Claim 1, **characterized in that** each actuation cable (101) comprises a coupling end (104) that is configured so as to couple to a corresponding actuation element (1001).

3. Device according to Claim 2, **characterized in that** it comprises a holding member (105) that prevents movement of at least one of the coupling ends (104), in particular each coupling end (104) is held by the holding member (105), said holding member (105) being removably fitted to the recess (103) such that its withdrawal releases said at least one of the coupling ends (104) .

4. Device according to any one of Claims 1 to 3, **characterized in that** it comprises a poka-yoke arranged in such a way that the control panel (1000) can be inserted into the recess (103) only in a predetermined position.

5. Device according to any one of Claims 1 to 4, **characterized in that** it comprises a system (106a, 106b) for locking the control panel (1000) when the latter is inserted into the recess (103).

6. Arrangement for a motor vehicle comprising a device (100) for receiving a control panel (1000) according to any one of the preceding claims, and a control panel (1000) provided with actuation elements (1001), in particular buttons, each having a part forming a man-machine interface, said control panel (1000) being fitted to the recess (103) in such a way that each actuation element (1001) is mechanically connected to a corresponding one of the actuation cables (101) .

7. Arrangement according to Claim 6, **characterized in that** it comprises at least one poka-yoke that ensures correct positioning of the control panel (1000) in the recess (103).

8. Arrangement according to either of Claims 6 and 7, **characterized in that** it comprises a system (106a, 106b) for locking the assembly of the control panel (1000) in the recess (103) of said device, this locking being in particular reversible.

9. Control panel (1000) provided with actuation elements (1001), in particular buttons, each having a part forming a man-machine interface, said control panel (1000) being configured so as to be inserted into a recess (103) of a device according to one of Claims 1 to 5, **characterized in that** it comprises a removable system for holding each one of the actuation elements (1001) in an initial position that permits direct coupling of said actuation elements (1001) with the actuation cables of the device (100) when the control panel (100) is inserted into the recess (103).

10. Method for assembling part of a motor vehicle, **characterized in that** it comprises:
- a step of providing a device (100) according to any one of Claims 1 to 5,
- a step of providing a control panel (100) provided with actuation elements (1001), in particular buttons, each having a part forming a man-machine interface,
- a step of inserting the control panel (1000) into the recess (103) of the device (100), this resulting in a coupling between each actuation element (1001) and a corresponding one of the actuation cables (101), by interaction of an actuation cable (101) with a corresponding part (1002) of the actuation element (1001).
